(19) Europäisches Patentamt
European Patent Office
Office européen des brevets

(11) Publication number: 0 180 982 B1

(12) # EUROPEAN PATENT SPECIFICATION

(45) Date of publication of patent specification: 20.02.91

(51) Int. Cl.⁵: C08F 210/02, //(C08F210/02, 220:18)

(21) Application number: 85114143.2

(22) Date of filing: 06.11.85

(54) **Ethylene copolymers.**

(30) Priority: 06.11.84 JP 233951/84

(43) Date of publication of application:
14.05.86 Bulletin 86/20

(45) Publication of the grant of the patent:
20.02.91 Bulletin 91/08

(84) Designated Contracting States:
DE FR GB

(56) References cited:
CH-A- 451 522
DE-A- 2 800 020
FR-A- 2 263 276
FR-A- 2 369 302

CHEMICAL ABSTRACTS, vol. 82, 1975, Columbus, OH (US); T.TAJIMA et al.: "Radical polymerization of 2,4,6-tribromophenyl acrylate, pentabromophenyl acrylate, and 2,4,6-tribromophenyl methracrylate", p. 2, no. 98422c

(73) Proprietor: NIPPON PETROCHEMICALS COMPANY, LIMITED
3-1, Uchisaiwaicho 1-chome Chiyoda-ku
Tokyo(JP)

(72) Inventor: Orikasa, Yuichi
3-35-2, Ohkubo, Konan-ku
Yokohama-shi Kanagawa-ken(JP)
Inventor: Kojima, Shinji
3-35-4, Ohkubo, Konan-ku
Yokohama-shi Kanagawa-ken(JP)
Inventor: Inoue, Takashi
29-330 Nagahama, Kanazawa-ku
Yokohama-shi Kanagawa-ken(JP)
Inventor: Yamamoto, Kaoru
4-4-7, Tamagawa, Sedagaya-ku
Tokyo(JP)
Inventor: Sato, Atsushi
2-15-23, Yagumo, Meguro-ku
Tokyo(JP)
Inventor: Kawakami, Shigenobu
1-15-10, Yahata
Ichikawa-shi Chiba-ken(JP)

(74) Representative: Strehl, Schübel-Hopf, Groening
Maximilianstrasse 54 Postfach 22 14 55
D-8000 München 22(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

(1) Field of the Invention

The present invention relates to ethylene copolymers. More specifically, it relates to ethylene copolymers useful for electrically insulating materials, foamed materials, modification of polymers such as engineering plastics

(2) Description of the Prior Art

Olefin polymers, especially, ethylene polymers and propylene polymers are excellent in various properties such as mechanical properties, workability and electrical properties, and are inexpensive and thus economical. Consequently, they are utilized as raw materials for electrical insulating materials and foamed materials, or as finished products such as films, pipes and containers in a variety of fields.

Further, there are well known olefin copolymers in which functional groups are introduced into the above-mentioned olefin polymers in order to improve their properties.

For example, polyethylene itself is also small in dielectric loss and has a high insulating power, and when crosslinked so as to remarkably improve its thermal resistance, it is employed as a good insulating material. However, for the purpose of utilizing polyethylenes as insulating materials for high-voltage cables and high-voltage equipments, a more improved and superior performance is desired for the polyethylenes.

Attempts have been made to improve the insulating power, and a method has been suggested in which an aromatic ring is introduced into an ethylene polymer.

Examples of such methods are :

(1) A method in which an aromatic polymer such as a polystyrene is mixed with a polyethylene or an olefin polymer (Japanese Patent Publication No. 20717/1963, and Japanese Patent Provisional Publication Nos. 142651/1975 and 54187/1977).

(2) A method in which a polyethylene is mixed with a block copolymer of styrene and a conjugated diene (Japanese Patent Provisional Publication No. 41884/1975).

(3) A method in which a graft polymerization is carried out between a polyethylene and styrene (Japanese Patent Publication No. 18760/1979).

(4) A method in which a polyethylene is impregnated with an electrical insulating oil (Japanese Patent Provisional Publication No. 33938/1974).

However, even according to any method just described, a sufficient improvement of the insulating power cannot be accomplished. In addition thereto, as for the method of the paragraph (1) mentioned above, the miscibility of the polyethylene or the polyolefin and the styrene polymer is poor, and in the method of the paragraph (2) above, thermal resistance and extrusion workability are bad. In the case of the method described in the paragraph (3), the previously crosslinked polyethylene is graft-polymerized with styrene in order to improve the destructive strength to impulse voltage (impulse voltage breakdown strenghts) of the polyethylene in a high-temperature range. In consequence, intricate equipments and processes are required, and there exists a drawback that the impulse voltage breakdown strength in a low-temperature range is poorer than that of an untreated raw polyethylene. With regard to the method of the paragraph (4), the kneaded electrical insulating oil will bleed out, when the polyethylene is used for a long period of time, or when environments are changed, so that functional effects of the polyethylene will be poorer than by any other method. Accordingly, any method is unsatisfactory, and thus insulating materials are now demanded which are stable for a long period of time and which have a more excellent performance.

On the other hand, regarding the field of foamed materials, the foamed polyethylene materials advantageously have a high elasticity and good strain recovery properties against repeated stress, but foam molding in a mold only permits manufacturing products having simple shapes. Further, in the case of bead foam molding (a molding method by using preliminarily foamed grains and carrying out the foam molding with the aid of steam heating) which makes possible the production of foamed materials having complicated shapes, the diffusion of a gas at the foaming step is too prompt and thus the decision of molding conditions is difficult, for which reason, the bead foam molding is not utilized prevalently.

It can also be presumed that a polystyrene suitable for the bead foam molding is blended with polyethylene grains which have been preliminarily foamed by adding a foaming agent thereto before the foam molding in a mold, but in such a molding method, fusing adhesion between different kinds of beads is

bad, and thus practicable foamed articles cannot be manufactured.

In recent years, some methods for preparing foamed polyethylene beads have been suggested by which the above-mentioned drawbacks can be eliminated, the release of a used foaming agent can be prevented, and foamed materials having a high magnifying power can be prepared.

Examples of such methods are :

(1) A method comprising the steps of dispersing polyethylene grains, a styrene monomer and a polymerization catalyst into an aqueous medium, forcedly adding thereto a gaseous or liquid physical foaming agent in ordinary state, and carrying out a suspension polymerization of the styrene monomer under heating and pressurizing in order to prepare foamed and modified polyethylene grains (Japanese Patent Publication Nos. 2469/1969, 32622/1970 and 32623/1970).

(2) A method comprising the steps of dispersing polyethylene grains, a styrene monomer and a polymerization catalyst into an aqueous medium, carrying out suspension polymerization under heating and pressurizing in order to prepare styrene-modified polyethylene grains, and adding a physical foaming agent to the prepared grains (Japanese Patent Publication Nos. 10150/1977 and Japanese Patent Provisional Publication Nos. 85187/1974 and 97884/1974).

(3) A method comprising the steps of carrying out a graft polymerization of a polyolefin resin with styrene under the irradiation of ionized radiation, and adding thereto a foaming agent in order to prepare a porous material (Japanese Patent Publication No. 19382/1969).

In addition to these mentioned methods, many techniques have been suggested, but all of them require complicated processes and equipments.

As a modifier for the preparation of a mixed composition of a resin such as a polyphenylene ether or a polycarbonate, i.e., a resin called an engineering plastic and an olefin resin, or as a modifier for improving impact resistance and workability of the engineering plastic, a styrene graft polyolefin or a styrene polymer is often used (Japanese Patent Provisional Publication Nos. 7448/1983, 98359/1983 and 141240/1983),but the miscibility between the engineering plastic and the olefin polymer is essentially poor, which fact is still present as a great problem. Therefore, the solution of this problem is strongly desired as yet.

It was further known that copolymers or graft polymers having good stability to light may be produced by catalytically polymerizing an $\alpha$-olefin with a phenol ester of an $\alpha,\beta$-unsaturated carboxylic acid. The obtained intermediate product is a copolymer comprising phenol ester groups which are rearranged in the presence of a Friedl-Crafts catalyst to form a polymer comprising aromatic ketone residues.

## Summary of the Invention

In view of the above-mentioned state of the art, the present invention has now been achieved as a result of intensive researches, and its object is to provide novel ethylene copolymers, which show an effectively improved performance necessary for electrical insulating materials, foamed materials and polymers, without involving conventional problems.

## Detailed Description of the Invention

The present invention is directed to a ethylene copolymer comprising 85.0 to 99.995 mol% of ethylene units, 0.005 to 5 mol% of a comonomer unit represented by the formula (I)

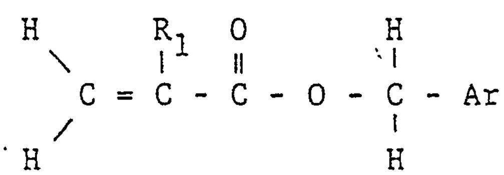
(I)

wherein Ar is

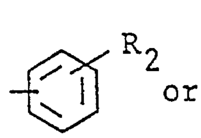 or 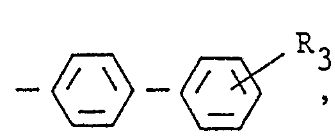,

$R_1$ is a hydrogen atom or a methyl group, $R_2$ is a hydrogen atom or a straight-chain or branched alkyl group having 1 to 4 carbon atoms, and $R_3$ is a hydrogen atom, a chlorine atom or a straight-chain or a branched alkyl group having 1 to 4 carbon atoms,

and 0 to 10 mol% of units of an ethylenically unsaturated monomer, the ethylene copolymer having a density of 0.860 to 0.970 g/cm$^3$ and a melt index measured in accordance with JIS K 6760, of 0.05 to 100 g/10 minutes.

The comonomer represented by the formula (I) is at least one selected from the group consisting of benzyl methacrylate, methylbenzyl methacrylate, benzyl acrylate, methylbenzyl acrylate, phenylbenzyl methacrylate and phenylbenzyl acrylate, and above all, benzyl methacrylate and benzyl acrylate are preferred.

A content of the above-mentioned comonomer in the copolymer is within the range of 0.005 to 5 mol%, preferably 0.01 to 2 mol% in terms of the comonomer unit.

When the content of the comonomer is less than 0.005 mol%, modification effects of the ethylene copolymer will scarcely be perceived; when it is in excess of 5 mol%, the copolymer will be economically expensive.

The ethylenically unsaturated monomer used in the present invention is by preference at least one selected from the group consisting of olefins having 3 to 10 carbon atoms such as propylene, butene-1, hexene-1, 4-methylpentene-1, octene-1 and decene-1; styrene; vinyl esters of alkane carboxylic acids having 2 and 3 carbon atoms; acrylic and methacrylic esters such as methyl acrylate, methyl methacrylate, ethyl acrylate, ethyl methacrylate, propyl acrylate, propyl methacrylate, glycidyl acrylate and glycidyl methacrylate; ethylenically unsaturated carboxylic acids, especially mono-or di-carboxylic acids, and their anhydrides, such as acrylic acid, methacrylic acid, maleic acid, fumaric acid and maleic anhydride; and ethylenically unsaturated carboxylic acid amides such as acrylic acid amide, methacrylic acid amide, maleic acid amide and fumaric acid amide.

The content of the above ethylenically unsaturated monomer used in the present invention is within the range of 0 to 10 mol%, preferably 0 to 7 mol%, more preferably 0 to 5 mol%.

The ethylene copolymer of the present invention can be manufactured by known methods such as an ionic polymerization employing a Ziegler catalyst and a radical polymerization under a high pressure, but in the case that a copolymer for electrical insulating materials is manufactured, the radical polymerization is preferable because of a less catalyst residue.

The Ziegler catalyst used in the ionic polymerization is a solid catalyst containing magnesium and titanium, and such a catalyst can be prepared by causing a titanium compound to be carried on an inorganic solid compound containing magnesium in a known manner and then combining it with an organic aluminum compound. Examples of the aforesaid inorganic solid compounds include metallic magnesium, magnesium hydroxide, magnesium carbonate, magnesium oxide and magnesium chloride; double salts, double oxides, carbonates, chlorides and hydroxides each containing a magnesium atom and a metal selected from silicon, aluminum and calcium; and compounds obtained by treating or reacting these inorganic solid compounds with oxygen-containing compounds, sulfur-containing compounds, aromatic hydrocarbons and halogen-containing compounds. The above-mentioned ionic polymerization can be carried out in the presence of such a Ziegler catalyst as mentioned, like a usual olefin polymerization.

This polymerization reaction is accomplished in an essentially oxygen-free and water-free state in a gaseous phase in the presence of an inactive solvent, and if necessary, by utilizing the monomer itself as a solvent. With regard to polymerization conditions for the olefin, a temperature is from 20 to 300 °C, preferably 40 to 200 °C, and a pressure is from ordinary pressure to 70 Bars gauge (kg/cm$^2$`g), preferably 2 to 60 Bars gauge (kg/cm$^2$'g). The adjustment of a molecular weight can be carried out to some extent by changing polymerization conditions such as the polymerization temperature and a molar ratio of a used catalyst but can be effectively accomplished by adding hydrogen to the polymerization system. Further, there can be carried out, without any problem, a multi-stage polymerization reaction comprising two or more stages in which polymerization conditions such as hydrogen concentrations and polymerization temperatures are different.

On the other hand, the above-mentioned radical polymerization under a high pressure means a method of catalytically polymerizing the monomers at once or stepwise under conditions of a polymerization pressure of 500 to 4,000 Bars (kg/cm$^2$), preferably 1,000 to 3,500 bars(kg/cm$^2$) and a reaction temperature of 50 to 400 °C, preferably 100 to 350 °C in the presence of a free-radical catalyst, a chain transfer agent, and if necessary, an auxiliary agent in an autoclave or a tube type reactor.

Examples of the above-mentioned free-radical catalysts include usual initiators such as peroxides,

hydroperoxides, azo compounds, amine oxides and oxygen.

Further, examples of the chain transfer agents include hydrogen, propylene,, butene-1; saturated aliphatic hydrocarbons and halogen-substituted hydrocarbons having 1 to 20 carbon atoms or more such as methane, ethane, propane, butane, isobutane, n-hexane, n-heptane, cycloparaffins, chloroform and carbon tetrachloride; saturated aliphatic alcohols having 1 to 20 carbon atoms or more such as methanol, ethanol, propanol and isopropanol; saturated aliphatic carbonyl compounds such as carbon dioxide, acetone and methyl ethyl ketone; and aromatic compounds such as toluene, diethylbenzene and xylene.

In the ethylene copolymer for electrically insulating materials manufactured by the high-pressure radical polymerization method, there occurs less tree phenomenon than by the ionic polymerization, the tree phenomenon being caused by the contamination with foreign matters such as catalyst residues. Therefore, the thus prepared copolymer can have remarkably improved insulating power.

The ethylene copolymer of the present invention also is excellent as a foamed material and also as a modifier for a polymer, and as long as the properties of the ethylene copolymer are not impaired remarkably, the copolymer may be mixed, for various uses, with at least one of thermoplastic resins such as olefin polymers (inclusive of copolymers) other than the ethylene copolymers of the present invention, polyacrylonitriles, polyamides, polycarbonates, ABS resins, polystyrenes, polyphenylene oxides, polyvinyl alcohol resins, vinyl chloride resins, vinylidene chloride resins and polyester resins; thermosetting resins such as petroleum resins, coumarone-indene resins, phenolic resins and melamine resins; and synthetic and natural rubbers such as ethylene-propylene copolymer rubbers (EPR, EPDM and the like), SBR, NBR, butadiene rubbers, IIR, chloroprene rubbers, isoprene rubbers and styrene-butadiene-styrene block copolymers.

In the present invention, there may be added, without any problem, conventional additives, such as an organic or an inorganic filler, an antioxidant, a lubricant, an organic or an inorganic pigment, an ultraviolet screening agent, an antistatic agent, a dispersant, a copper de-activator, a neutralizer, a foaming agent, a plasticizer, an anti-foaming agent, a flame-retardant, a crosslinking agent, an improver for flow, an improver for weld strength and a nucleating agent. Brief Description of the Drawings

Fig. 1 is an infrared spectrum chart of a copolymer which has been prepared in Example 3 or the present invention.

Examples 1 to 10

In each example set forth in Table 1, an atmosphere in a 3.8-liter metallic autoclave reactor equipped with a stirrer was sufficiently replaced with nitrogen, and a predetermined amount of ethylene, n-hexane, which was a chain transfer agent, and each comonomer were then placed in the reactor. Afterward, di-tertiary-butyl peroxide which was a polymerization initiator was poured thereinto, and polymerization was carried out at a temperature of 170 °C under a pressure of 1,600 bars(kg/cm$^2$)for one hour.

A portion of the resultant polymer was dissolved in heated carbon tetrachloride and then was added to a large amount of acetone in order to deposit it again, and washing was carried out with acetone, followed by vacuum drying.

Each purified and dried polymer was molded into a sheet having a thickness of 10 to 20 $\mu$m by means of heating compression. The ethylene copolymer of the present invention was confirmed from absorbencies mainly based on an ester bond in the vicinity of 1,730 cm$^{-1}$ and a benzene ring around 700 cm$^{-1}$ in accordance with an infrared spectroscopic analysis. A content of each copolymerized comonomer in the polymer was quantitatively analyzed on the basis of an absorbency due to an ester bond in the vicinity of 1,730 cm$^{-1}$, and the results are shown in Table 1. Further, the melt index and the density of each produced polymer were measured in accordance with JIS K 6760.

Table 1

Polymerization conditions

| Example | Material monomers Ethylene (g) | Comonomer Name | (g) | n-Hexane (g) | Ditertiary butyl peroxide (mg) |
|---|---|---|---|---|---|
| 1 | 1,750 | Benzyl methacrylate | 3 | 280 | 12.3 |
| 2 | 1,780 | Benzyl methacrylate | 10 | 280 | 16.4 |
| 3 | 1,730 | Benzyl methacrylate | 30 | 270 | 12.3 |
| 4 | 1,710 | Benzyl methacrylate | 50 | 210 | 16.4 |
| 5 | 1,740 | Benzyl methacrylate | 100 | 150 | 16.4 |
| 6 | 1,740 | Benzyl acrylate | 20 | 270 | 12.3 |
| 7 | 1,750 | Methylbenzyl methacrylate | 10 | 270 | 12.3 |
| 8 | 1,740 | Phenylbenzyl methacrylate | 10 | 280 | 16.4 |
| 9 | 1,740 | Phenylbenzyl acrylate | 10 | 280 | 16.4 |

Table 1 (Cont.)

Produced polymer

| Example | Yield (g) | Melt index (g/10 min) | Density (g/cm$^3$) | Content of comonomer (mol%) |
|---|---|---|---|---|
| 1 | 318 | 1.3 | 0.928 | 0.09 |
| 2 | 341 | 2.0 | 0.929 | 0.25 |
| 3 | 258 | 2.9 | 0.931 | 1.1 |
| 4 | 273 | 2.4 | 0.933 | 1.7 |
| 5 | 270 | 4.1 | 0.939 | 3.9 |
| 6 | 282 | 1.9 | 0.930 | 0.71 |
| 7 | 228 | 5.2 | 0.930 | 0.28 |
| 8 | 296 | 3.1 | 0.929 | 0.13 |
| 9 | 305 | 2.7 | 0.929 | 0.16 |

## Claims

1. An ethylene copolymer comprising 85.0 to 99.995 mol% of ethylene units, 0.005 to 5 mol% of units of a comonomer represented by the formula (I)

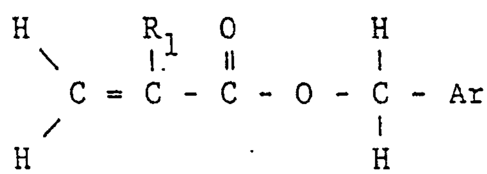

(I)

wherein Ar is

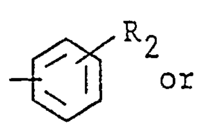
or
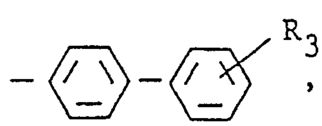
,

$R_1$ is a hydrogen atom or a methyl group, $R_2$ is a hydrogen atom or a straight chain or branched alkyl group having 1 to 4 carbon atoms, and $R_3$ is a hydrogen atom, a chlorine atom or a straight-chain or a branched alkyl group having 1 to 4 carbon atoms,

and 0 to 10 mol% of units of an ethylenically unsaturated monomer, said ethylene copolymer having a density of 0.860 to 0.970 g/cm$^3$ and a melt index, measured in accordance with JIS K 6760, of 0.05 to 100 g/10 minutes.

2. An ethylene copolymer according to Claim 1 wherein said comonomer represented by said formula (I) is at least one comonomer selected from the group consisting of benzyl methacrylate, benzyl acrylate, phenylbenzyl methacrylate and phenylbenzyl acrylate.

3. An ethylene copolymer according to Claim 1 or 2 wherein said copolymer is obtainable by a high-pressure radical polymerization at a pressure of 500 to 4,000 bars (kg/cm$^2$) at a temperature of 50 to 400° C.

4. The use of an ethylene copolymer according to any of the Claims 1 to 3 for the production of foamed materials.

5. The use of an ethylene copolymer according to any of the Claims 1 to 3 as an electrically insulating material.

6. The use of an ethylene copolymer according to any of the Claims 1 to 3 as a modifier for polymers.

## Revendications

1. Un copolymère d'éthylène comprenant 85,0 à 99,995 moles % de mailles d'éthylène, 0,005 à 5 moles % de mailles d'un comonomère représenté par la formule (I)

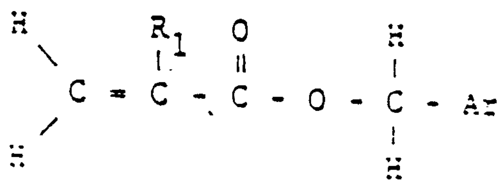

(I)

où Ar est

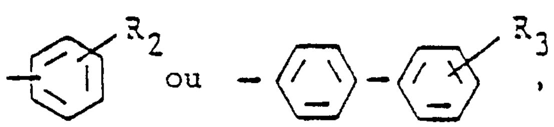

R$_1$ est un atome d'hydrogène ou un groupe méthyle, R$_2$ est un atome d'hydrogène ou un groupe alcoyle à chaîne droite ou ramifié ayant 1 à 4 atomes de carbone et R$_3$ est un atome d'hydrogène, un atome de chlore ou un groupe alcoyle à chaîne droite ou ramifié ayant 1 à 4 atomes de carbone et 0 à 10 moles % de mailles d'un monomère éthyléniquement insaturé, le copolymère d'éthylène ayant une masse volumique de 0,860 à 0,970 g/cm$^3$ et un indice de fluidité à chaud (mesuré selon la norme JIS K 6760) de 0,05 à 100 g/10 minutes.

2. Un copolymère d'éthylène selon la revendication 1, dans lequel le comonomère représenté par la formule (I) est au moins un comonomère choisi dans le groupe constitué par le méthacrylate de benzyle, l'acrylate de benzyle, le méthacrylate de phénylbenzyle et l'acrylate de phényl-benzyle.

3. Un copolymère d'éthylène selon la revendication 1 ou 2, qui peut être obtenu par une polymérisation radicalaire sous haute pression à une pression de 500 à 4 000 bars (kg/cm$^2$) et à une température de 50 à 400° C.

4. L'utilisation d'un copolymère d'éthylène selon l'une quelconque des revendications 1 à 3 pour la production de matières à l'état de mousse.

5. L'utilisation d'un copolymère d'éthylène selon l'une quelconque des revendications 1 à 3 comme matière électriquement isolante.

6. L'utilisation d'un copolymère d'éthylène selon l'une quelconque des revendications 1 à 3 comme agent de modification pour des polymères.

## Ansprüche

1. Ethylencopolymeres, das 85 bis 99,995 Mol-% Ethyleneinheiten, 0,005 bis 5 Mol-% Einheiten eines Comonomeren, dargestellt durch die Formel (I)

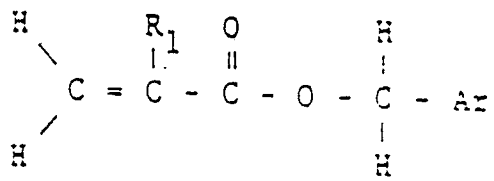

(I)

worin Ar für

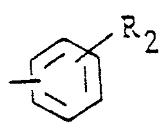 oder 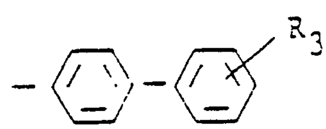

steht, $R_1$ ein Wasserstoffatom oder eine Methylgruppe ist, $R_2$ ein Wasserstoffatom oder eine geradekettige oder verzweigte Alkylgruppe mit 1 bis 4 Kohlenstoff atomen ist, und $R_3$ ein Wasserstoffatom, ein Chlor atom oder eine geradekettige oder verzweigte Alkyl gruppe mit 1 bis 4 Kohlenstoffatomen ist,
und 0 bis 10 Mol-% Einheiten eines ethylenisch ungesättigten Monomeren enthält, wobei das Ethylencopolymere eine Dichte von 0,860 bis 0,970 g/cm$^3$ aufweist und einen Schmelzindex, gemessen nach JIS K 6760, von 0,05 bis 100 g/10 Minuten aufweist.

2. Ethylencopolymeres nach Anspruch 1, worin als Comonomeres, das durch Formel (I) dargestellt wird, mindestens ein Comonomeres aus der Gruppe, bestehend aus Benzylmethacrylat, Benzylacrylat, Phenylbenzylmethacrylat und Phenylbenzylacrylat, gewählt wird.

3. Ethylencopolymeres nach Anspruch 1 oder 2, worin das Copolymere durch radikalische Hochdruckpolymerisation bei einem Druck von 500 bis 4000 bar (kg/cm$^2$) und einer Temperatur von 50 bis 400$^\circ$C erhalten wird.

4. Verwendung eines Ethylencopolymeren nach einem der Ansprüche 1 bis 3 zur Herstellung von Schaumstoffen.

5. Verwendung eines Ethylencopolymeren nach einem der Ansprüche 1 bis 3, als elektrisch isolierendes Material.

6. Verwendung eines Ethylencopolymeren nach einem der Ansprüche 1 bis 3 als Modifiziermittel für Polymere.

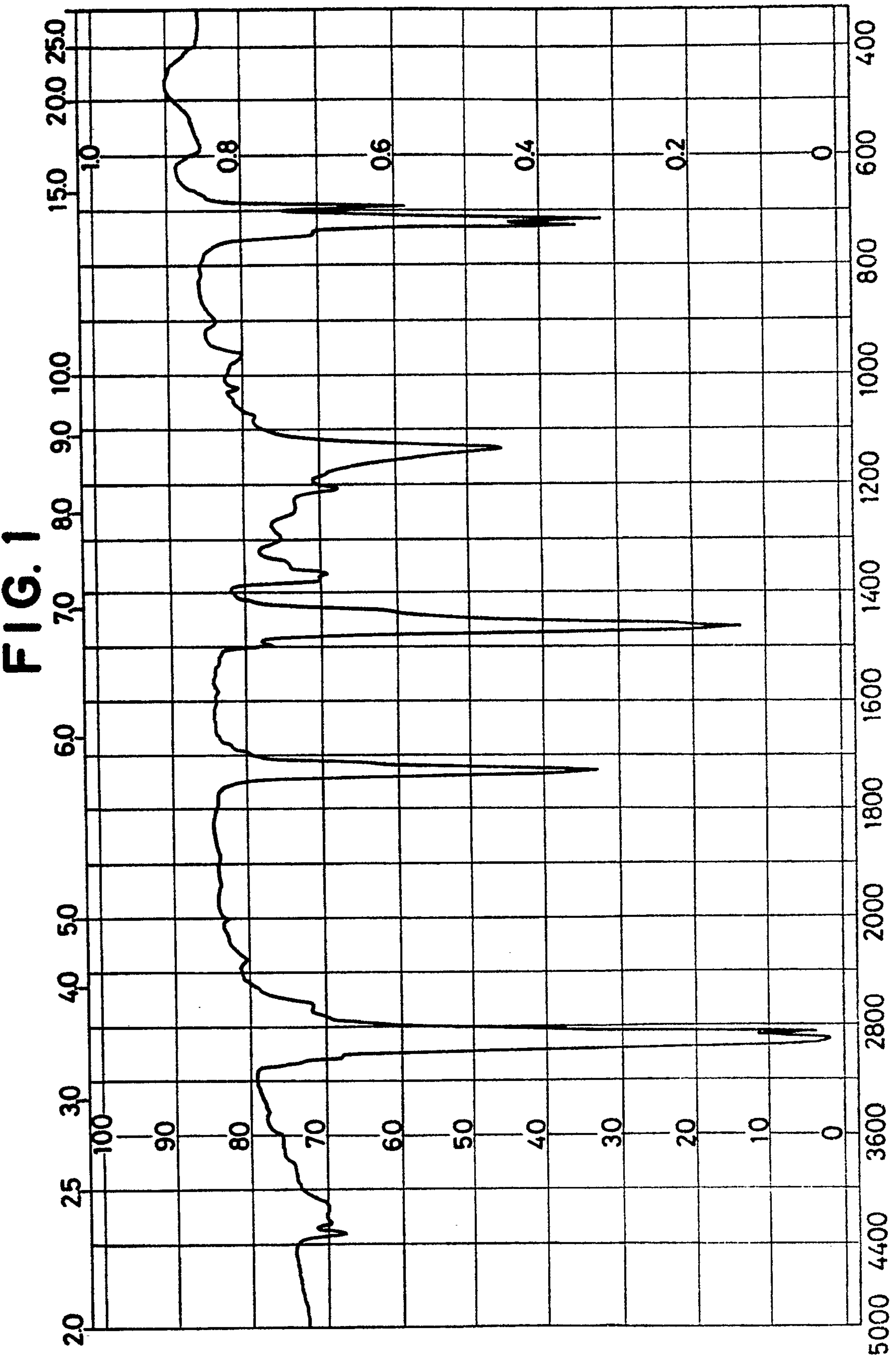
2.0
2.5
3.0
4.0
5.0
6.0
7.0
8.0
9.0
10.0
15.0
20.0
25.0
100
90
80
70
60
50
40
30
20
10
0
1.0
0.8
0.6
0.4
0.2
0
5000
4400
3600
2800
2000
1800
1600
1400
1200
1000
800
600
400

FIG. 1